# EUROPEAN PATENT APPLICATION

(11) **EP 2 088 380 A2**
(43) Date of publication of application: **12.08.2009**
(21) Application number: 09151846.4
(22) Date of filing: 02.02.2009
(51) Int. Cl.: F24F 7/08, F24F 13/02, F16L 9/19, F16L 41/02

(54) **Duct system for ventilation systems**

(30) Priority: 08.02.2008 DK 200800178
(71) Applicant: Poulsen, Richard, 8462 Harlev J (DK)
(72) Inventor: Poulsen, Richard, 8462 Harlev J (DK)
(74) Representative: Gregersen, Niels Henrik

(57) **Abstract**

A duct system for ventilation systems, including a supply duct (12) which is adapted to be connected with feed openings for ventilation air disposed at or in the vicinity of a window or an outer wall of one or more rooms, and a return duct (16) which is adapted to be connected with return openings for ventilation air disposed at a distance from a window or an outer wall of the one or more rooms, the supply and return ducts being provided in a common tubular duct (2) constituted by a pipe with circular cross-section, as the supply and return ducts (12, 16) are separated by a longitudinal partitioning (4) which consists of a metal sheet having a zigzag profile in a cross-sectional view perpendicular to the common tubular duct, where each of the supply and return ducts is connected via curving connecting flanges to a branch box (6) which at both sides of the common tubular duct has both supply and return connection pipe stubs (10, 14), and which is adapted to be connected with the supply and return ducts (12, 16) via separate lateral cutouts in the common tubular duct (2).

## Description

### Field of the Invention

The present invention concerns a duct system for ventilation systems and of the kind indicated in the preamble of claim 1.

### Background of the Invention

Establishing of ventilation systems, e.g. in single-storey houses, most often implies a very cumbersome and time-consuming installation work where a common supply duct is used - frequently in the form a galvanised Spiro pipe (spiral pipe) - which by means of galvanised Spiro pipes with lesser diameters is connected to respective feed openings that most often are disposed at the window or outer wall of the rooms, and where a common return duct, frequently in the form a galvanised Spiro pipe, which by means of galvanised Spiro pipe with lesser diameter is connected to respective return openings that most often are disposed at a distance from the window or outer wall of the rooms.

Such an installation form, where common supply and return ducts are often located on the ceiling or loft side by side and centrally in longitudinal direction of the house, entails many difficult and space consuming crossings of the connection pipes to feed and return openings in respective rooms. Moreover, the many crossing connnection pipes implies a very cumbersome and time consuming work with insulating both the common supply and return ducts and the many crossing connection pipes.

### Object of the Invention

On that background, the invention has the purpose of indicating a new and improved duct system of the kind specified in the introduction, and which by simple technical measures enables achieving substantial alleviation in connection with installation and insulation work and simultaneously achieving a significant reduction of the capital costs as well as the operational loss of heat in duct systems for ventilation systems.

### Description of the Invention

The duct system according to the invention is **characterised in that** each of the supply and return ducts is connected via curving connecting flanges to a branch box which at both sides of the common tubular duct has both supply and return connection pipe stubs, and which is adapted to be connected with the supply and return ducts via separate lateral cutouts in the common tubular duct.

By means of simple technical measures it hereby becomes possible to achieve a substantial alleviation in connection with installation and insulation work and simultaneously achieve a significant reduction in capital costs as well as the operational heat loss in duct systems for ventilation systems, as the longitudinal partitioning - when furthermore working with counter-flow at respective sides thereof - cannot avoid contributing to a substantial reduction of the heat loss in the duct system.

With the intention of maximising the heat exchanger effect, the duct system according to the invention is suitably designed such that the partitioning as seen from the top and bottom sides of the common tubular duct has a zigzag profile with increasing width inwards towards the centre of the duct.

The duct system according to the invention is further designed in a particularly advantageous way such that it includes connection boxes which are adapted for partly enclosing the common tubular duct and which are designed with both supply and return connection pipe stubs adapted to be connected with the supply and return ducts via separate lateral cutouts in the common tubular duct.

In a simple way is hereby avoided that supply connections to feed openings for ventilation air and return connections from suction openings for ventilation air back to the common tubular duct are to intersect or be passed across the usual separate supply and return duct. In addition to the simplified piping, great alleviation of insulation work can be achieved which may be further simplified in that at least the common cylindric supply and return duct is pre-insulated by the producer.

With the intention of arranging connections to ventilation system and e.g. heat exchanger, it may be advantageous that the duct system according to the invention is designed such that it includes a double connection stub which is adapted to be connected with an end part of the common tubular duct, and which includes connections for both supply and return ducts of the common tubular duct.

One or more of such double connection stubs may also be used where a longitudinal central common tubular duct in a building section is to be connected with another longitudinal central common tubular duct in another building section which e.g. runs perpendicularly to the first-mentioned building section.

With the object of simplifying and facilitating the installation work, the duct system according to the invention may suitably be designed such that the common tubular duct is designed with coupling means at opposite ends adapted to be connected with complementary coupling means of a corresponding common tubular duct in such a way that respective supply and return ducts are interconnected.

In order to facilitate coupling between respective common supply and return ducts, the duct system according to the invention may advantageously be designed such that the coupling means include mutually angled pointed plate members which at respective sides of a central vertical connecting axis extends obliquely inwards into respective zigzag profiles.

It may furthermore be advantageous to design the duct system according to the invention in such a way that that the coupling means are sealed externally of the angled pointed plate member by means of a sealing agent, preferably a foamed sealing agent. In a simple way is hereby achieved a very efficient external sealing between the zigzag profiled heat exchanger surface and the oblique pointed plate members of coupling means.

The duct system according to the invention is suitably designed such that the common tubular duct is provided at an external end part with parts of snap-action couplings for rapid connection with complementary parts of snap-action couplings of a bottom or an end part of a corresponding tubular duct.

### Description of the Drawing

The invention is described in more detail below in connection with the drawing in which:
- Fig. 1: shows a perspective view of an embodiment of a combined supply and return duct for a duct system according to the invention;
- Fig. 2: shows a perspective view of an embodiment for a branch box for a combined supply and return duct according to the invention;
- Fig. 3: shows a perspective view of the combined supply and return duct shown in Fig. 1, further showing connections to the branch box, cf. Fig. 2;
- Fig. 4: shows a perspective view for illustrating how a combined supply and return duct according to the invention may be coupled tightly to a corresponding ventilation duct;
- Fig. 5: shows a perspective view where the further connection to a supply or return duct according to the invention can be seen through a connecting branch;
- Fig. 6: shows a perspective view of an embodiment of a branch box for a duct system according to the invention;
- Fig. 7: shows a perspective view of an embodiment of a supply box for a duct system according to the invention;
- Fig. 8: shows a perspective view of an embodiment of a pipe element with combined supply and return duct for a duct system according to the invention, shown with a particular embodiment of an end part of the pipe element;
- Fig. 9: shows an enlarged perspective view of the particular end part at the pipe element, cf. Fig. 8;
- Fig. 10: shows a plan view of a pipe element, cf. Fig. 8, as seen from the side and with a middle part removed;
- Fig. 11: shows a plan view of the end part, cf. Fig. 9, as seen from the end thereof;
- Fig. 12: shows in three views how an end closure for respective duct parts of the pipe element, cf. Fig. 8, is designed and disposed - A: seen from the side, B: seen from the front and C: seen from above;
- Fig. 13: shows a plan view of an embodiment of a profile of a partitioning between the supply and return ducts of a pipe element, cf. Fig. 8, as seen from the end and indicating the applied bending angles;
- Fig. 14: shows a perspective view of an embodiment of a second connection stub for a duct system according to the invention;
- Fig. 15: shows a perspective view of the connection stub shown in Fig. 8, as seen from an opposite end; and
- Fig. 16: shows a perspective view of a total illustration of a preferred embodiment of a duct system according to the invention.

### Detailed Description of the Invention

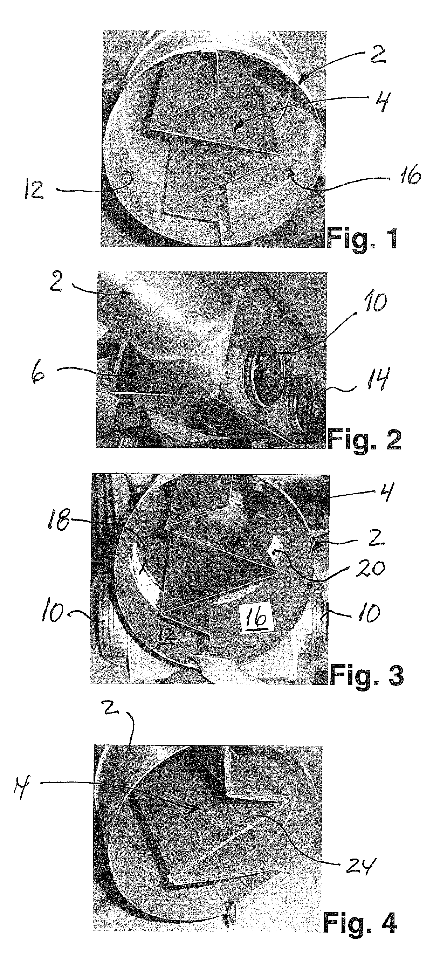

Figs. 1-5 show views of a prototype of a common supply and return duct 2 consisting of Spiro pipe with a diameter of 200 mm in which is established a central longitudinal partitioning 4 in the shape of a metal sheet with zigzag profile with largest width in the common supply and return duct 2.

In Fig. 2 is shown a branch box 6 which via curving flanges 8 is connected with the common supply and return duct 2, and which at each side of it includes a connection pipe stub 10 connected to the supply side 12 of the common supply and return duct 2 and a connection pipe stub 14 connected to the return side 16 of the common supply and return duct 2.

Internally of the supply side 12 of the common supply and return duct 2 in its curving pipe wall in Fig. 3 appears a connection opening 18 which is connected to connection pipe stubs 10 at each their side of the branch box 6, and a connection opening 20 which is connected with connection pipe stubs 14 at each side of the branch box 6, as this is provided with a transverse partitioning 22 between the connection pipe stubs 10 and 14.

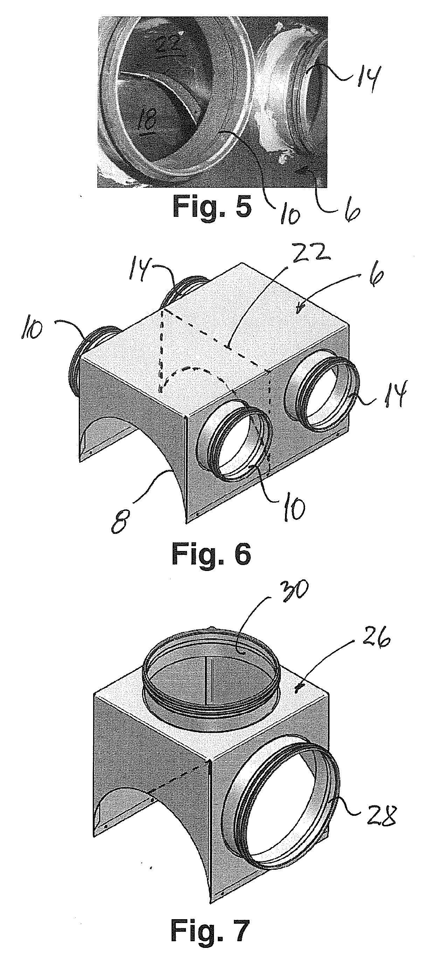

Fig. 4 shows how the zigzag profiled partitioning 4 along a free end edge may be provided with a sealing strip 24 such that a sealing may be formed between two uniform partitionings 4. Fig. 5 shows a view through a connection pipe stub 10 where the connecting opening 18 and the partitioning 22 can be seen.

Fig. 6 shows another view of the branch box 6 with curving flanges 8, connection pipe stubs 10 and 14, and between these a traversing partitioning 22. Fig. 7 shows a connection box 26 with horizontal pipe stub 28 and a vertical return pipe stub 30 and an internal oblique partitioning 32 arranged there between which is only indicated by dotted lines.

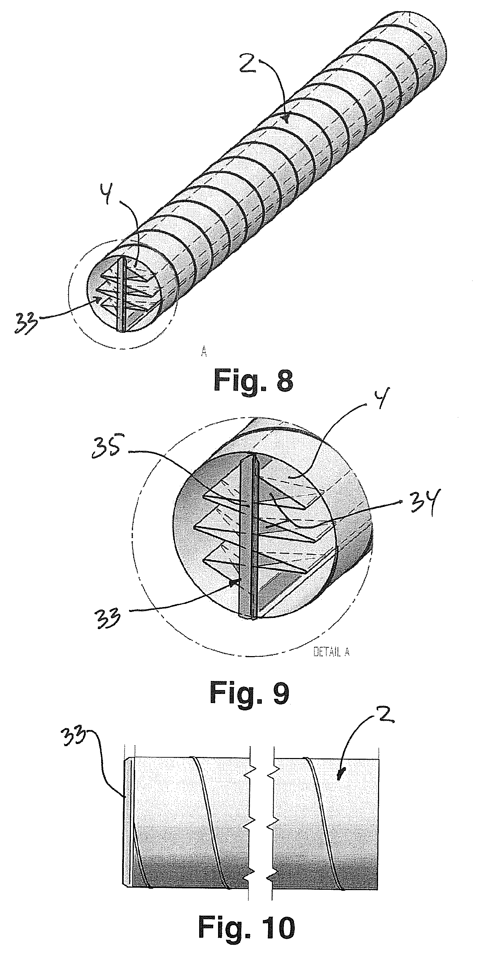

Figs. 8-10 show the common supply and return duct 2 with the supply side 12 and the return side 16. Fig. 9 shows how one or both end parts 33 of the common supply and return duct 2 is provided with particular acutely angled closure plates 34 with the intention of providing an airtight finishing, the plates 34 projecting obliquely inwards/outwards from vertical centre profile plates 36 and 38 internally of the zigzag profiles of the partitioning 4. At the back side of the acutely angled closure plates 34, the zigzag profiles of the partitioning 4 of the airtight end closure is sealed by means of insulating foam or joint filler.

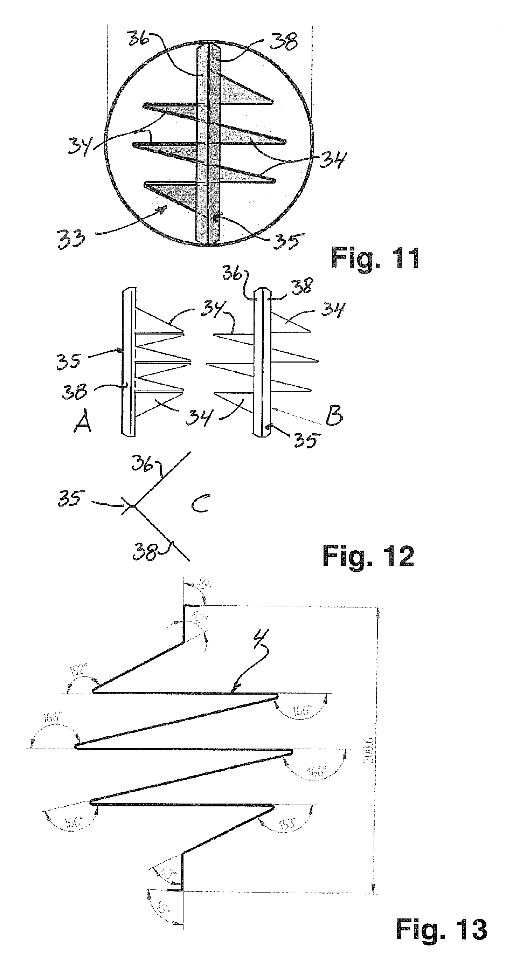

Fig. 11 shows a plan view of the end part 33 while Fig. 12 shows the special sealing arrangement in three views - A: seen from the side, B: seen from the front, and C: seen from above. The vertical centre profile plates 36 and 38 mutually form an outwardly open V-groove 36 which can be used for receiving a narrow vertical sheet that may form connection to an adjacent duct 2, and which may contribute to ensure correct mutual disposition such that respective supply and return sides 12, 16 of mutually joined ducts 2 are mutually angularly disposed correctly.

Fig. 13 shows the exact bending profile of the partitioning 4 which is fastened internally of the common tubular duct 4 by means of upper and lower short flanges 40, respectively, which are fastened to the inner side of the tubular duct 4 along its bottom and top by means of tubular rivets and an intermediate sealing strip.

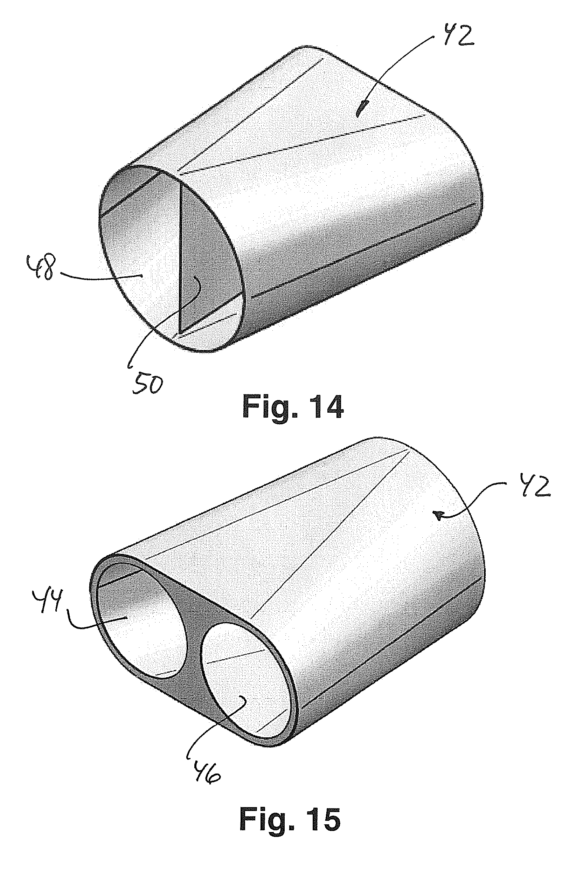

Figs. 14 and 15 show a double end connection 42 with a supply pipe stub 44 and a return pipe stub 46 and an end part 48 with a vertical partitioning plate 50 which is adapted to engage the vertical central V-groove 35 of the end part 33 of the common supply and return duct 2.

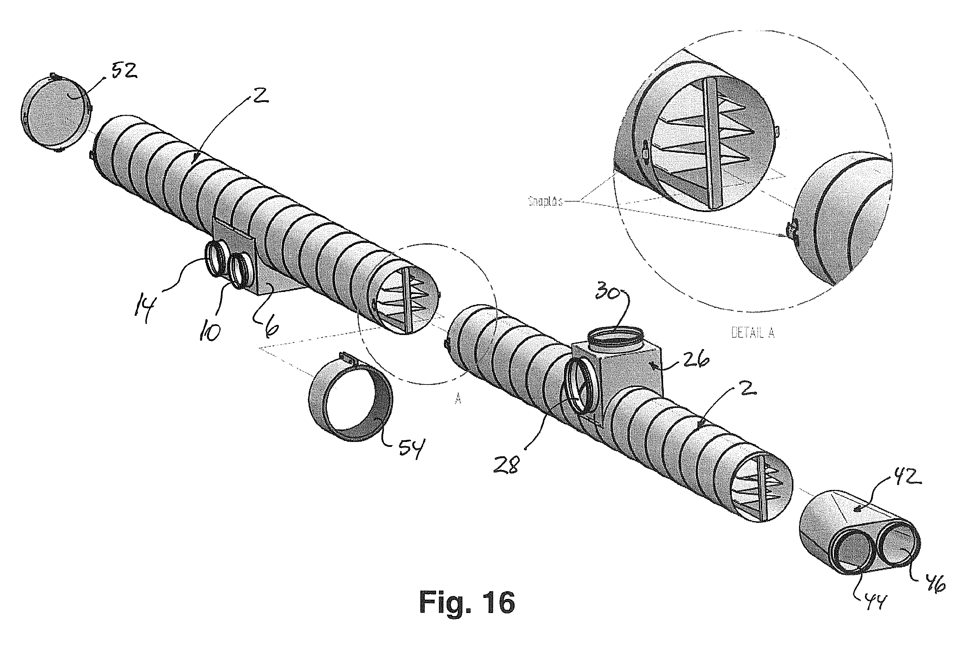

Fig. 16 shows an assembly drawing where respective parts of the duct system according to the invention are designated with the hitherto used reference numbers. The common supply and return duct 2 is made of Spiro pipe with a diameter of 200 mm. End connection 42 has two pipe stubs for Spiro pipe with diameter 125 mm.

The connection box 26 has two 160 mm pipe stubs 28 and 30 for Spiro pipe with diameter 160 mm. The branch box 6 has four 100 mm pipe stubs for Spiro pipe with diameter 100 mm. Rearmost in Fig. 16 is shown a bottom 52 with diameter 200 mm while a connecting sleeve 54 with diameter 200 mm for external sealing between two supply and return ducts 2 is shown at the centre of Fig. 16.

The duct system according to the invention may advantageously include e.g. common supply and return ducts 2 made of Spiro pipes with diameter 200 mm and with standard length of 2000 mm with or without branch boxes 6, i.e. where some supply and return ducts do not include branch boxes 6, and where some include branch boxes 6 with connecting pipe stubs 10 and 14.

In other words, by the duct system according to the invention it is aimed to enable application of standard components to the greatest possible extent. Moreover, it will be within the scope of the invention that the duct system according to the invention is delivered pre-insulated from the producer to the largest possible extent such that installation work on site can be minimised. Finally, it is to be mentioned that the duct system according to the invention can be made of lockseam pipes with circular cross-section, i.e. it does not have to be Spiro pipe. The common supply and return duct of the duct system according to the invention can be made with rectangular cross-section of galvanised steel sheet, as well as the connecting ducts in general may have other cross-sections than circular, e.g. quadratic or rectangular cross-sections.

## Claims

1. A duct system for ventilation systems, including a supply duct which is adapted to be connected with feed openings for ventilation air disposed at or in the vicinity of a window or an outer wall of one or more rooms, and a return duct which is adapted to be connected with return openings for ventilation air disposed at a distance from a window or an outer wall of the one or more rooms, the supply and return ducts being provided in a common tubular duct (2) constituted by a pipe with circular cross-section, as the supply and return ducts (12, 16) are separated by a longitudinal partitioning (4) consisting of a metal sheet having a zigzag profile in a cross-sectional view perpendicular to the common tubular duct, **characterised in that** via curving connecting flanges, each of the supply and return ducts (12, 16) is connected to a branch box (6) which at both sides of the common tubular duct (2) has both supply and return connection pipe stubs (10, 14), and which is adapted to be connected with the supply and return ducts (12, 16) via separate lateral cutouts in the common tubular duct (2).

2. Duct system according to claim 1, **characterised in that** the partitioning as seen from the top and bottom sides of the common tubular duct has a zigzag profile with increasing width inwards towards the centre of the duct.

3. Duct system according to any preceding claim, **characterised in that** it includes connection boxes which are adapted for partly enclosing the common tubular duct and which are designed with both supply and return connection pipe stubs adapted to be connected with the supply and return ducts via separate lateral cutouts in the common tubular duct.

4. Duct system according to any preceding claim, **characterised in that** it includes a double connection stub which is adapted to be connected with an end part of the common tubular duct, and which includes connections for both supply and return ducts of the common tubular duct.

5. Duct system according to any preceding claim, **characterised in that** the common tubular duct is designed with coupling means at opposite ends adapted to be connected with complementary coupling means of a corresponding common tubular duct in such a way that respective supply and return ducts are interconnected.

6. Duct system according to any preceding claim, **characterised in that** the coupling means include mutually angled pointed plate members which at respective sides of a central vertical connecting axis extends obliquely inwards into respective zigzag profiles.

7. Duct system according to any preceding claim, **characterised in that** the coupling means are sealed externally of the angled pointed plate member by means of a sealing agent, preferably a foamed sealing agent.

8. Duct system according to any preceding claim, **characterised in that** at an external end part, the common tubular duct is provided with parts of snap-action couplings for rapid connection with complementary parts of snap-action couplings of a bottom or an end part of a corresponding tubular duct.
